# EUROPEAN PATENT SPECIFICATION

(11) **EP 3 072 933 B1**
(45) Date of publication and mention of the grant of the patent: **05.05.2021**
(21) Application number: 15450015.1
(22) Date of filing: 23.03.2015
(51) Int. Cl.: C09C 1/02, D21H 25/18, D21H 17/63, D21H 17/69, D21H 17/00, D21H 19/36, D21H 19/38, D21H 19/42

(54) **STABILIZED ALKALINE COMPOSITE NANOPARTICLES, METHOD FOR PRODUCING THE SAME AND USE THEREOF**
STABILISIERTE ALKALISCHE VERBUNDNANOPARTIKEL, VERFAHREN ZUR HERSTELLUNG DAVON UND VERWENDUNG DAVON
NANOPARTICULES COMPOSITES ALCALINES STABILISÉES, PROCÉDÉ DE PRODUCTION ET UTILISATION DE CELLES-CI

(43) Date of publication of application: 28.09.2016
(73) Proprietor: Universität Graz, 8010 Graz (AT)
(72) Inventor: Mohan, Tamilselvan, 8010 Graz (AT); Amornkitbamrung, Lunjakorn, 8043 Graz (AT); Kargl, Rupert, 8020 Graz (AT); Ribitsch, Volker, 8010 Graz (AT)
(74) Representative: Ellmeyer, Wolfgang

(56) References cited:
- WO-A1-02/42557
- DE-A1- 19 921 616
- M. KONUKLAR, M. SAÇAK: "A New Method for Paper Conservation: Triple Mixture of Methyl Cellulose, Carboxymethyl Cellulose and Nano-Micro Calcium Hydroxide Particles", HACETTEPE J. BIOL. & CHEM., vol. 39, no. 4, 2 December 2011 (2011-12-02), pages 403-411, XP002745379,

## Description

The present invention relates to stabilized alkaline composite nanoparticles containing at least a hydroxide or carbonate or organic compound of an alkaline earth metal, a method for preparing stabilized alkaline composite nanoparticles containing at least a hydroxide or carbonate or organic compound of an alkaline earth metal, and a use of stabilized alkaline composite nanoparticles.

During their storage, cellulose based materials such as paper, sized cardboard, books and other biopolymer based items deteriorate because of influences of the environment and chemical reactions which take place in the interior of the material itself. Furthermore several other processes such as chemical, biological action, oxidation and ink-corrosion contribute to cellulose degradation of cellulose based materials, whose mechanisms are understood to a large extent. Thereby acidity of the cellulosic materials is increasing successively due to acid-catalysed hydrolysis, which leads to an irreversible depolymerisation of cellulose chains by breaking the hemi-acetal bonds between different constituents of cellulose molecules, whereby cellulose based materials loose not only their optical impression but also their cohesion and mechanical strength. As a result of this decreased cohesion cellulose based materials become brittle or fragile and they lose most part of their strength.

The main changes within acidic cellulose based materials which occur during its aging are an increased acidity, caused by the formation of sulphuric acid from substances contained in sizing agents and organic acids via an oxidation process, embrittlement, which means inflexibility due to linking reactions and formation of salt bonds within the cellulose based materials, yellowing is caused by the formation of dark coloured cellulose oxidation products, microbial degradation, which means degradation of paper based products via an acidic or enzymatic mechanism and ink-corrosion, which causes the hydrolytic cellulose splitting due to high acidity of inks and oxidative cellulose decomposition in the vicinity of mobile metal ions. The latter takes only place in printed cellulose based materials such as books.

To circumvent the above mentioned problems, several de-acidification processes were developed but still the issues related to the complete removal of acidity and to bring an adequate alkaline reserve into the cellulose based materials and the improvement of mechanical strength have not been reached in a sufficient extent so far.

Most of the presently known conservatory measures aim therefore to the acid neutralization of cellulose based materials and additionally to obtain an alkaline reserve in the cellulose based materials. Known de-acidification treatment processes are to be classified in liquid processes, and among them non-aqueous and vaporing processes are known. From DE 199 21 616 A1 a de-acidifying material is known, which consists of a dispersion of alkaline earth metal compounds in an organic solvent. Especially calcium carbonate dispersed in non-polar solvents such as hexamethyldisiloxane (HMDSO) is described. However, DE 199 21 616 A1 does not disclose examples of the dispersing agent, but only describes the use of an alkylaryl acid for stabilizing the alkaline earth metal compound. One of the main disadvantages of this material is the poor stability and short life-time of the dispersion. Additives such as cellulose ethers are used in this dispersion for stabilizing the same and for strengthening the paper to be treated. Notwithstanding the dispersion according to DE 199 21 616 A1 is only stable for some hours and it is therefore necessary to use the dispersion immediately after its production. A use of commercially available inorganic nanoparticles is not satisfying because the particles agglomerate and dispersions formed from these particles produce dusty deposits on the surface of cellulose based materials treated.

Konuklar and Sacak, Hacettepe J. Biol. & Chem. 39(4), 403-411 (2011), disclose solutions of methyl cellulose (MC) and carboxymethyl cellulose (CMC), i.e. hydrophilic polysaccharides, in combination with Ca(OH)₂ (nano)particles, i.e. so-called "triple mixtures", for the de-acidification and strengthening of paper. These solutions are prepared by mixing solutions of MC and CMC in water with (up to saturated) solutions of Ca(OH)₂, suspensions of Ca(OH)₂, or solid Ca(OH)₂. However, these solutions need to be prepared by mixing the components in a specific sequence, i.e. Ca(OH)₂-MC-CMC, in order to prevent the mixture from gelling.

WO 02/42557 A1 also discloses solutions to be used for solidifying and/or stabilizing organic materials, and more specifically solutions of a silylated, hydroxy and/or carboxy and/or amino group-containing compound, among others, for example, CMC or MC being optionally partially silylated in order to decrease their hydrophilicity. These solutions may be used in combination with a de-acidifying metal salt (i.e. a magnesium or magnesium-titanium salt). The silylated polysaccharides are stated to act as a protective colloid which delays the reaction between the de-acidifying agent (i.e. the metal salt) and water, thus also preventing immediate hydrolysis of the metal salt after applying solutions thereof onto paper material to be treated.

It is therefore an object of the present invention to provide nanoparticles, especially alkaline composite nanoparticles which are stable, do not agglomerate if they are used in a dispersion and form moreover a stable dispersion which can be stored at least for weeks without any deterioration of the same.

It is a further object of the present application to provide a method for the production of nanoparticles, especially alkaline composite nanoparticles, which provides nanoparticles which are stable, do not agglomerate/sediment if they are used in a dispersion and form moreover a stable dispersion which can be stored at least for weeks without any deterioration/sedimentation of the same.

### DISCLOSURE OF THE INVENTION

For solving the first object, the invention provides, in a first aspect, stabilized alkaline composite nanoparticles comprising at least one alkaline earth metal salt, characterized in that the particles comprise:
a) an alkaline core comprising
   i) at least one alkaline earth metal salt selected from calcium hydroxide, magnesium hydroxide, magnesium carbonate, calcium carbonate, magnesium bis-(hexamethyldisilazide), calcium bis(hexamethyldisilazide), calcium acetylacetonate hydrate, calcium bis(2,2,6,6,-tetramethyl-3,5-heptanedionate) (Ca(TMHD)₂), or a mixture thereof, and
   ii) optionally at least one hydrophilic cellulose derivative; and
b) a stabilizing outer layer comprising at least one stabilizer selected from silylated hydrophobic polysaccharides or hydrophobic polysaccharides.

By using calcium hydroxide, magnesium hydroxide, magnesium carbonate, calcium carbonate, magnesium bis(hexamethyldisilazide), calcium bis(hexamethyl-disilazide), calcium acetylacetonate hydrate, calcium bis(2,2,6,6,-tetramethyl-3,5-heptanedionate) (Ca(TMHD)₂) or mixtures thereof as the alkaline material of the core it is possible to obtain nanoparticles which show a sufficient high pHvalue for de-acidifying any known cellulose based material. By stabilizing these core particles with at least one stabilizer selected from silylated hydrophobic polysaccharides or hydrophobic polysaccharides, the surfaces of the core particles are coated or covered with a polymer network so that the covered or coated particles are stable over the time in a dispersion formed thereof.

In preferred embodiments, the alkaline core comprises a least one hydrophilic cellulose derivative functionalizing the at least one alkaline earth metal salt. Even better results can be obtained with particles in which the core consists of polysaccharide-functionalized alkaline particles containing at least one of the following adducts: hydroxyethyl cellulose - calcium hydroxide (HEC-Ca(OH)₂), methyl cellulose - calcium hydroxide (MC-Ca(OH)₂), carboxymethyl cellulose - calcium hydroxide (CMC-Ca(OH)₂), hydroxyethyl cellulose - magnesium hydroxide (HEC-Mg(OH)₂), methyl cellulose - magnesium hydroxide (MC-Mg(OH)₂), carboxymethyl cellulose - magnesium hydroxide (CMC-Mg(OH)₂), hydroxyethyl cellulose - calcium carbonate (HEC-CaCO₃), methyl cellulose - calcium carbonate (MC-CaCO₃) and carboxymethyl cellulose - calcium carbonate (CMC-CaCO₃), hydroxyethyl cellulose - magnesium carbonate (HEC-MgCO₃), methyl cellulose - magnesium carbonate (MC-MgCO₃) and carboxymethyl cellulose - magnesium carbonate (CMC-MgCO₃).

Particles having a core consisting of polysaccharide-functionalized alkaline particles show a uniform size distribution and did not agglomerate/sediment even if they are stored for more than 6 months. If such particles are stabilized with silylated hydrophobic polysaccharides according to a preferred embodiment of the present invention especially with silylated hydrophobic polysaccharides which are selected from: trimethylsilyl cellulose (TMSC), silylated hydroxyethyl cellulose (SHEC), silylated methyl cellulose (SMC) and silylated carboxymethyl cellulose (SCMC).

Moreover the hydrophobic polysaccharides are preferably selected from the group consisting of cellulose acetate (CA), cellulose butyrate (CAB) and ethyl cellulose (EC), . With such stabilized nanoparticles it is possible to prepare suspension which are stable for at least 6 month.

The stabilized alkaline composite nanoparticles according to the invention show a particle size of 50 nm to 900 nm, especially 100 nm to 800 nm. Best results are achieved with particle sizes of about 100 nm or a particle size distribution between 100 nm and 600 nm.

According to a further preferred embodiment of the invention the alkaline nanoparticles are characterized in that the outer stabilizing layer silylated hydrophobic polysaccharides or hydrophobic polysaccharides are successfully created/coated in a larger amount around the functionalized core. Further analysis of the core particles showed that the alkaline nanoparticles surfaces are completely coated or covered with a hydrophilic or hydrophobic polymer network. An acid-base titration of these particles revealed that a higher amount of polymer is present in composite nanoparticles when higher concentrations of hydrophilic cellulose derivatives are used. Highly stable colloidal dispersions are obtained when the composite nanoparticles or pure nanoparticles coated with a stabilizing outside layer from silylated hydrophobic polysaccharides dispersed in hexamethyldisiloxane (HMDSO). Moreover it was found that higher molecular weight of the silylated hydrophobic polysaccharide used had a direct influence on the stability of de-acidified cellulose material. Hereby molecular weights of the silylated hydrophobic polysaccharide of between 70.000 to 1.000.000 g/mol can be used and best results are obtained with molecular weights between 500.000 and 1.000.000 g/mol. Dispersions of the silylated hydrophobic polysaccharide-polymer in non-polar solvents are surprisingly stable for more than 6 month without any agglomeration of particles and any degradation of product. The higher molecular weight silylated hydrophobic polysaccharides provided an exceptional stability to the composite nanoparticles and pure nanoparticles, and improved the mechanical stability of the treated paper significantly.

For achieving the second object, the present invention provides, in a second aspect, a method for preparing stabilized alkaline composite nanoparticles according to the first aspect, the method being characterized in that the nanoparticles comprise calcium or magnesium hydroxide or carbonate, or a mixture thereof, and comprising the following steps:
a) adding an aqueous solution of sodium, or potassium, hydroxide or bicarbonate to an aqueous solution of
   i) calcium chloride, magnesium chloride, or a mixture thereof, and
   ii) optionally a hydrophilic cellulose derivative,
   while stirring the reaction mixture at room temperature at 200 to 10,000 rpm or at 200 to 1,000 rpm, to obtain a particulate precipitate;
b) separating the precipitated particles comprising calcium or magnesium hydroxide or carbonate, or a mixture thereof, optionally functionalized with said hydrophilic cellulose derivative, and washing the particles with water;
c) drying the particles;
d) dispersing the dried particles in a solution of at least one stabilizer selected from the group consisting of silylated hydrophobic polysaccharides or hydrophobic polysaccharides, in an organic solvent, thus foming a dispersion of stabilized alkaline composite nanoparticles in said solvent;
e) optionally separating the obtained stabilized nanoparticles from the dispersion and drying the separated particles.

In preferred embodiments, the cellulose derivative according to a)ii) is selected from methyl cellulose (MC), hydroxyethyl cellulose (HEC), carboxymethyl cellulose (CMC), or a mixture thereof. In further preferred embodiments, drying is accomplished at a temperature of about 40 °C to 80 °C for at least 3 hours. In further preferred embodiments, the solvent is a non-polar solvent selected from hexamethyldisiloxane (HMDSO), fluorinated solvents, tetrahydrofuran (THF), butanone, or a mixture thereof. In further preferred embodiments, the silylated hydrophobic polysaccharides are selected from trimethylsilyl cellulose (TMSC), silylated hydroxyethyl cellulose (SHEC), silylated methyl cellulose (SMC), silylated carboxymethyl cellulose (SCMC), or a mixture thereof, and/or the hydrophobic polysaccharides are selected from cellulose acetate (CA), cellulose butyrate (CAB), ethyl cellulose (EC), fluorinated cellulose, or a mixture thereof.

Moreover, in preferred embodiments, an at least 1 molar aqueous solution of sodium or potassium hydroxide or of sodium or potassium bicarbonate is added to the aqueous solution of calcium chloride, magnesium chloride or a mixture thereof.

In this method, concentration of all constituents may be varied in a wide range without leaving the scope of the invention. Furthermore, it is in the common knowledge of a skilled person that for example stirring can be replaced by any other method such for example sonication for obtaining an intense and complete intermixture of components or that reaction temperature and time can be varied. For example a higher reaction temperature shortens reaction time.

By using the inventive method it is possible to obtain particles which are stable over the time and moreover show a uniform distribution of particles having a size between 50 nm and 800 nm. Particles produced are crystalline, and the shape of functionalized Ca(OH)₂ particles, for example, as confirmed by scanning and tunnelling electron microscopy (SEM and TEM) is hexagonal. Kinetic stability measurements showed that the functionalized particles are highly stable when a hydrophobic stabilizer is employed. One example is trimethylsilyl cellulose (TMSC).

For avoiding that any starting material, especially any chloride, remains in the final product, at least 3 separating and washing cycles, especially 5 separating and washing cycles, of calcium and/or magnesium hydroxide or calcium carbonate particles which are optionally functionalized with the hydrophilic cellulose derivate particles are performed.

The precipitated calcium and/or magnesium hydroxide or magnesium/calcium carbonate particles are separated preferably by centrifugation, and washing of the particles is preferably performed with water. With such a procedure nearly all sodium chloride (NaCl) by-product is removed.

Best results will be obtained with a method wherein the concentration of the at least one hydrophilic cellulose derivate is selected between 0.1 % and 3 %, especially 0.2 and 2 % of the mixture of step a).

In the present invention the term "room temperature" means a temperature of 25 °C ± 2 °C.

Preferably the solution of step a) is stirred at 200 rpm to 1,000 rpm, especially at 300 rpm to 500 rpm, but it is in the knowledge of a skilled person that instead of stirring any other method for obtaining an intense intermixture of components can be used in the present invention.

In a third aspect, the present invention provides the use of the stabilized alkaline composite nanoparticles according to the first aspect in a method for de-acidifying cellulose based materials such as paper, sized cardboard, books or biopolymer based items. Processes for the de-acidification of cellulose based materials are well known. The use of these processes has a lot of drawbacks because of the fact that some known dispersions are harmful for the environment or that high pressure is necessary for the de-acidification of cellulose based materials such as paper or books. And finally one of the drawbacks is that treated products show often a white film of deposited alkaline material originating from used de-acidification material. No film of deposited alkaline composite nanoparticles can be ascertained if the particles according to the invention are used, and moreover it is not necessary to use, for example, a dispersion produced from these particles immediately before the treatment of paper to obtain reproducible results.

According to a preferred use the cellulose based materials are soaked under a pressure between 1 bar and 50 bar, especially 1 bar to 5 bar, in a non-polar organic solvent containing the stabilized alkaline composite nanoparticles or pure nanoparticles. By using a process according to the present invention it is possible to soak the materials to be treated such as books or paper in a dispersion containing the stabilized alkaline composite nanoparticles according to the present invention and a non-polar organic solvent. For fastening the process it is however possible to use higher pressures such as pressures in the range of 5 to 50 bar, but according to the present invention it is not even necessary to use high pressure.

Also a spraying application is possible for materials which might not be removed from their support or being too large to be soaked.

Moreover by using a dispersion containing nanoparticles according to the present invention no alteration of books being treated can be ascertained, especially no bleeding of inks can be recognized.

Best results and especially dispersions showing a high stability over time can be obtained if the stabilized alkaline composite particles are used as dispersion in at least one non-polar organic solvent selected from hexamethyldisiloxane (HMDSO), fluorinated solvents, tetrahydrofuran (THF) and butanone.

In the following, the invention is described on the basis of examples, especially examples showing the preparation and stabilization of composite nanoparticles or pure alkaline nanoparticles having an outer layer according to the invention and finally the use of the obtained particles in a process for treating cellulose based materials.

### Example 1:

### Preparation and stabilization of alkaline composite nanoparticles

Nanoparticle composites with size ranges from 200 to 800 nm are synthesized by *in-situ* chemical precipitation method. For the preparation of alkaline composite nanoparticles based on Ca(OH)₂-HEC (hydroxyethyl cellulose) or -MC (methyl cellulose), an aqueous solution of sodium hydroxide (1.62 mM, 100 mL) is added to the aqueous solution of polymer (0.3 to 3% w/v HEC or MC) containing calcium chloride (0.405 M) under vigorous stirring at 25 °C. The final concentrations of polymer (HEC or MC or CMC) in the mixture are between 0.2% and 2% w/v. After stirring for 1 h, the resulting white precipitates of adducts consisting of white HEC or MC or CMC-calcium hydroxide particles are separated by centrifugation and washed with water. Five cycles of centrifugation and washing are applied to remove the sodium chloride byproduct. The purified precipitates are dried in an oven at 60 °C for 12 h to obtain a powder of Ca(OH)₂-HEC or -MC or -CMC composite nanoparticles. The synthesized composite nanoparticles were characterized using IR, FT-Raman, XRD, SEM, TEM and acid-base titration.

To achieve stabilization, the polymer-functionalized composite nanoparticles, (0.2 g to 2 g of Ca(OH)₂-HEC or -MC or -CMC) are dispersed either in hydrophobic polysaccharides (e.g. trimethylsilyl cellulose (TMSC), fluorinated cellulose, cellulose acetate (CA)) solution (100 mL) and sonicated for 30 min at room temperature. The TMSC polymer was dissolved in HMDSO solvent (100 mL, w/v). The kinetic stability of the samples in the non-polar solvent is investigated using UV-visible spectroscopy. The composite nanoparticles show exceptional high stability in TMSC/HMDSO solution.

From the above analysis, it turned out that the alkaline nanoparticles surfaces are successfully coated/covered with a hydrophilic polymer network. Particles functionalized with 0.2% HEC contain 7.5% of polymer, and the value increases to 17.6% when functionalized with 2% HEC. On the other hand, particles functionalized with 0.2% MC contain 8.3% of polymer, and the value increases to 39.4% when functionalized with 2% MC. Comparing between two kinds of polymer with the same concentration, the percentage of polymer in particles functionalized with MC is higher than functionalized with HEC, especially with 2% polymer.

This result is caused by the solubility of polymer since MC is less soluble in water than HEC. The molecular information from IR and FT-Raman spectroscopy confirmed the interaction between the particles and cellulose derivatives especially HEC which had a strong interaction to the particles. The stronger interaction between particles and HEC is caused by the excess availability of OH-groups and increased solubility of HEC. This effect is less pronounced with MC. Results from the IR and XRD measurement revealed that the solvent HMDSO has no effect on crystal structure and stability, but influences the shape of functionalized-Ca(OH)₂ particles as confirmed by SEM and TEM. The pure particles exhibit hexagonal shapes whereas a disc shape structure with diameter of 500 to 800 nm and thickness of 150 nm is observed for the particles dispersed in HMDSO solvent. Kinetic stability measurements showed that the functionalized particles are stable. Maximum stability is achieved at higher TMSC concentration (between 1 and 2 g/100 mL) indicating that TMSC prevents agglomeration of functionalized Ca(OH)₂ particles.

### Example 2:

Nanoparticle composites with size ranges from 300 to 800 nm are synthesized by *in situ* chemical precipitation method. For the preparation of alkaline composite nanoparticles based on Mg(OH)₂-HEC (hydroxyethyl cellulose), -MC (methyl cellulose) or -CMC (carboxymethyl cellulose), an aqueous solution of sodium hydroxide (1.62 mM, 100 mL) is added to the aqueous solution of polymer (0.3 to 3% w/v HEC, MC or CMC) containing magnesium chloride (0.405 M) under vigorous stirring at 25 °C. The final concentrations of polymer (HEC, MC or CMC) in the mixture are between 0.2% and 2% w/v. After stirring for 1 h, the resulting white precipitates of adducts consisting of white HEC, MC or CMC magnesium hydroxide particles are separated by centrifugation and washed with water. Four cycles of centrifugation and washing are applied to remove sodium chloride by-product. The purified precipitates are dried in an oven at 50 °C for 11 h to obtain a powder of Mg(OH)₂-HEC, -MC or -CMC composite nanoparticles. The synthesized composite nanoparticles were characterized using IR, FT-Raman, XRD, SEM, TEM and acid-base titration.

To achieve stabilization, the polymer functionalized composite nanoparticles, (0.2 g to 2 g of Mg(OH)₂-HEC, -MC or -CMC) are dispersed either in trimethylsilyl cellulose (TMSC) solution (100 mL) and sonicated for 35 min at room temperature. The TMSC polymer was dissolved in HMDSO solvent (100 mL, w/v). The kinetic stability of the samples in non-polar solvent is investigated using UV-Visible spectroscopy. The composite nanoparticles show exceptional high stability in TMSC/HMDSO solution.

From the above analysis, it turned out that the alkaline nanoparticles surfaces are successfully coated/covered with a hydrophilic polymer network. Particles functionalized with 0.2% HEC had 7.0% of polymer and the value increases to 17.6% when functionalized with 2% HEC. On the other hand, particles functionalized with 0.2% MC have 8.6% of polymer and the value increases to 39.0% when functionalized with 2% MC. Comparing between two kinds of polymer with the same concentration, the percentage of polymer in particles functionalized with MC is higher than functionalized with HEC, especially with 2% polymer.

This result might be caused by the solubility of polymer since MC is less soluble in water than HEC. The molecular information from IR and FT-Raman spectroscopy confirmed the interaction between the particles and cellulose derivatives especially HEC which had a strong interaction to the particles. The stronger interaction between particles and HEC is caused by the excess availability of OH-groups and increased solubility of HEC. This effect is less pronounced with MC. Results from the IR and XRD measurement revealed that the solvent HMDSO has no significant effect on crystal structure, but influences the shape of functionalized-Mg(OH)₂ particles as confirmed by SEM and TEM. The pure particles exhibit hexagonal shapes whereas a disc shape structure with diameter of 550 to 750 nm and thickness of 150 nm is observed for the particles dispersed in HMDSO solvent. Kinetic stability measurements showed that the functionalized particles are stable. Maximum stability is achieved at higher TMSC concentration (between 1 and 2 g/L) indicating that TMSC prevents agglomeration of functionalized Mg(OH)₂ particles.

### Example 3:

Nanoparticle composed of magnesium bis(hexamethyldisilazide), calcium bis(hexamethyldisilazide), calcium acetylacetonate hydrate or calcium bis(2,2,6,6,-tetramethyl-3,5-heptanedionate) (Ca(TMHD)₂) stabilized with silylated hydrophobic polysaccharides and hydrophobic polysaccharides are prepared in the following way: 0.1 to 2 % of magnesium bis(hexamethyldisilazide), calcium bis(hexamethyl-disilazide), calcium acetylacetonate hydrate or calcium bis(2,2,6,6,-tetramethyl-3,5-heptanedionate) (Ca(TMHD)₂) are dispersed in TMSC/HMDSO (0.1 to 4%, w/v). The TMSC polymer was dissolved in HMDSO solvent (100 mL, w/v). The kinetic stability of the samples in non-polar solvent is investigated using UV-Visible spectroscopy. The composite nanoparticles show exceptional high stability in TMSC/HMDSO solution.

### Example 4 (not part of the invention):

De-acidifying components of poly(dimethylsiloxane) diglycidyl ether terminated, poly(dimethylsiloxane) aminopropyl terminated, stabilized with and without silylated hydrophobic polysaccharides and hydrophobic polysaccharides are prepared as follows: 0.1 to 10 % of diglycidyl ether-terminated poly(dimethylsiloxane), aminopropyl-terminated poly(dimethylsiloxane) are dissolved in TMSC solutions in HMDSO (0.1 to 4%, w/v) or in pure HMDSO (without stabilizer). The TMSC polymer was dissolved in HMDSO solvent (100 mL, w/v). The kinetic stability of the samples in non-polar solvent is investigated using UV-Visible spectroscopy. The diglycidyl ether-terminated poly(dimethylsiloxane) and aminopropyl-terminated poly(dimethylsiloxane) compounds show exceptional high stability in TMSC/HMDSO solution.

### Example 5:

### Use of stabilized composite nanoparticles in a process for de-acidification of books

For de-acidification of biopolymer samples an organic solvent provided with hydrophobically modified composite nanoparticles or pure nanoparticles according to the invention, or diglycidyl ether-terminated poly(dimethylsiloxane) and aminopropyl-terminated poly(dimethylsiloxane) compounds (not part of the invention) at ambient pressure. In this process, the paper samples are transferred into a cylindrical container. A rubber bag together with paper samples and organic dispersion containing alkaline composite nanoparticles are placed inside the container and are treated for 1 h. Afterwards the samples are taken out and dried at room temperature. The solvent remained in the chamber is collected, purified by microfiltration technique and reused for the next de-acidification process. The experiment is carried out at room temperature.

### Example 6:

For de-acidification of biopolymer samples an organic solvent provided with hydrophobically modified composite nanoparticles or pure nanoparticles according to the invention, or diglycidyl ether-terminated poly(dimethylsiloxane) and aminopropyl-terminated poly(dimethylsiloxane) compounds (not part of the invention) in a nitrogen gas atmosphere of up to 5 bar. In this process, the paper samples are transferred into a cylindrical container separating the samples from the nitrogen gas. A rubber bag together with paper samples and organic dispersion containing alkaline composite nanoparticles are placed inside the container and the samples are treated for 30 minutes by applying a pressure using nitrogen gas. Afterwards the samples are taken out and dried at room temperature. The solvent remained in the chamber is collected, purified by distillation under reduced pressure and reused for the next de-acidification process. The experiment can be carried out at room temperature.

The treated paper samples of examples 5 and 6 were investigated using water contact angle, IR spectroscopy and SEM analysis, mechanical strength, and alkaline reserve were also determined. A higher water contact angle is observed for all coated paper samples compared to uncoated samples. This effect is increased when higher concentrations of TMSC are used in the coating solution, implying that the paper surfaces are successfully covered with functional particles. The IR spectra showed the presence of a sharp peak at 1450 and 873 cm⁻¹ for Ca(OH)₂ particles, 1641 cm⁻¹ stretching vibration for HEC or MC and peaks at 757, 848, and 1252 cm⁻¹ for TMSC polymer. This further confirms the presence of coatings of functionalized particles on the paper surface. Similar proofs were obtained from the results of FT-Raman spectra where peaks related to Ca(OH)₂ (peaks at 358 and 3618 cm⁻¹ for Ca-O and O-H stretching vibration) prove the presence of the polymers HEC or MC at 2900 cm⁻¹. SEM micrographs show morphology and even distribution of the composite nanoparticles on paper substrate. Polygonal and disc shape particles with the size in the range of 500 nm to 1 µm are observed. A larger amount of composite nanoparticles is found on the paper substrate when a lower concentration of TMSC is applied as stabilizing agent. By using a high concentration of TMSC, the particles are well stabilized in the dispersion. Therefore, the degree of particles adsorption/deposition on paper substrates might be lower when using a low concentration of TMSC. The pH of the paper before and after treatment was determined using a cold water extraction and pH measurements; it increased from 4 to the range of 10 to 11 after treatment. The alkaline reserve of paper was determined by back-titration and revealed good result as the value of alkaline reserve in library paper was between 26 and 55 milli-equivalent of (OH⁻) per 100 g of paper for the pure and polymer functionalized particles. The mechanical strength of paper was improved when high concentrations (2 and 4%) of TMSC were applied for coating. TMSC forms a polymer network on paper surfaces and results in the reinforcement of paper. It is therefore obvious that coating using HEC-functionalized Ca(OH)₂ particles results in a higher improvement (40-50 %) on paper strength than coating with pure particles.

To conclude, the de-acidification process is economic, efficient and provides an even distribution of nanoparticles/polymeric compounds both locally and on the surfaces of paper. This approach eliminates the acid-hydrolysis of cellulose macromolecules by neutralization of acidity present in archival material, creates enough alkaline reserve (1-2 %) that is sufficient to neutralize the acid which will be generated during further aging, and causes an increase in mechanical strength (40-50 %) without removing the ink and changing the transparency of paper samples. The paper strength can be improved up to 80 % when higher molecular weight TMSC is used as a stabilizer.

## Claims

1. Stabilized alkaline composite nanoparticles comprising at least one alkaline earth metal salt, **characterized in that** the particles comprise:
a) an alkaline core comprising
i) at least one alkaline earth metal salt selected from calcium hydroxide, magnesium hydroxide, magnesium carbonate, calcium carbonate, magnesium bis(hexamethyl-disilazide), calcium bis(hexamethyldisilazide), calcium acetylacetonate hydrate, calcium bis(2,2,6,6,-tetramethyl-3,5-heptanedionate), or a mixture thereof, and
ii) optionally at least one hydrophilic cellulose derivative; and
b) a stabilizing outer layer comprising at least one stabilizer selected from silylated hydrophobic polysaccharides or hydrophobic polysaccharides.

2. The stabilized alkaline composite nanoparticles according to claim 1, **characterized in that** the alkaline core comprises at least one hydrophilic cellulose derivative functionalizing the at least one alkaline earth metal salt, the at least one hydrophilic cellulose derivative being selected from hydroxyethyl cellulose, methyl cellulose and carboxymethyl cellulose.

3. The stabilized alkaline composite nanoparticles according to claim 2, **characterized in that**
i) the at least one alkaline earth metal salt is selected from calcium hydroxide, magnesium hydroxide, calcium carbonate, magnesium carbonate; and
ii) the at last one hydrophilic cellulose derivative is selected from hydroxyethyl cellulose, methyl cellulose, carboxymethyl cellulose.

4. The stabilized alkaline composite nanoparticles according to any one of claims 1 to 3, **characterized in that**
- the silylated hydrophobic polysaccharides are selected from trimethylsilyl cellulose (TMSC), silylated hydroxyethyl cellulose (SHEC), silylated methyl cellulose (SMC), silylated carboxymethyl cellulose (SCMC); and/or
- the hydrophobic polysaccharides are selected from cellulose acetate (CA), cellulose butyrate (CAB), ethyl cellulose (EC), fluorinated cellulose.

5. The stabilized alkaline composite nanoparticles according to any one of claims 1 to 5, **characterized in that** the particle size of the stabilized alkaline composite nanoparticles ranges from 50 nm to 900 nm.

6. The stabilized alkaline composite nanoparticles according to claim 5, **characterized in that** the particle size of the stabilized alkaline composite nanoparticles ranges from 100 nm to 800 nm.

7. A method for preparing stabilized alkaline composite nanoparticles according to any one of claims 1 to 6, **characterized in that**
the nanoparticles comprise calcium or magnesium hydroxide or carbonate, or a mixture thereof, and the method comprises the following steps:
a) adding an aqueous solution of sodium, or potassium, hydroxide or bicarbonate to an aqueous solution of
i) calcium chloride, magnesium chloride, or a mixture thereof, and
ii) optionally a hydrophilic cellulose derivative,
while stirring the reaction mixture at room temperature at 200 to 10,000 rpm or at 200 to 1,000 rpm, to obtain a particulate precipitate;
b) separating the precipitated particles comprising calcium or magnesium hydroxide or carbonate, or a mixture thereof, optionally functionalized with said hydrophilic cellulose derivative, and washing the particles with water;
c) drying the particles;
d) dispersing the dried particles in a solution of at least one stabilizer selected from the group consisting of silylated hydrophobic polysaccharides or hydrophobic polysaccharides, in an organic solvent, thus foming a dispersion of stabilized alkaline composite nanoparticles in said solvent;
e) optionally separating the obtained stabilized nanoparticles from the dispersion and drying the separated particles.

8. The method according to claim 7, **characterized in that** the cellulose derivative according to a)ii) is selected from methyl cellulose (MC), hydroxyethyl cellulose (HEC), or carboxymethyl cellulose (CMC).

9. The method according to any one of claims 7 and 8, **characterized in that** drying is accomplished at a temperature of about 40 °C to 80 °C for at least 3 hours.

10. The method according to any one of claims 7 to 9, **characterized in that** the solvent is a non-polar solvent selected from hexamethyldisiloxane (HMDSO), fluorinated solvents, tetrahydrofuran (THF), butanone, or optionally a mixture thereof with liquid CO₂.

11. The method according to any one of claims 7 to 10, **characterized in that**
- the silylated hydrophobic polysaccharides are selected from trimethylsilyl cellulose (TMSC), silylated hydroxyethyl cellulose (SHEC), silylated methyl cellulose (SMC), or silylated carboxymethyl cellulose (SCMC), and/or
- the hydrophobic polysaccharides are selected from cellulose acetate (CA), cellulose butyrate (CAB), ethyl cellulose (EC), or fluorinated cellulose.

12. Use of stabilized alkaline composite nanoparticles according to any one of claims 1 to 6 in a method for de-acidfying and strengthening cellulose-based materials such as paper, sized cardboard, books, paintings on cellulosic ground material, wood carvings and constructions, or biopolymer based items, especially items known as "cultural heritage".

13. The use according to claim 12, **characterized in that** the stabilized alkaline composite nanoparticles are used as a dispersion in at least one non-polar organic solvent selected from hexamethyldisiloxane (HMDSO), fluorinated solvents, tetrahydrofuran (THF), butanone, or mixtures thereof.

14. The use according to claim 13, **characterized in that** the stabilized alkaline composite nanoparticles are used in a non-aqueous chemical process for restoring cellulose-based materials, wherein said dispersion of the stabilized alkaline composite nanoparticles in said at least one non-polar organic solvent, which optionally comprises pure nanoparticles and/or other alkaline compounds, is applied either at ambient pressure or under a pressure between 1 bar and 50 bar, especially 1 bar to 5 bar, or using a spraying process.

## Patentansprüche

1. Stabilisierte alkalische Verbundstoff-Nanopartikel, die zumindest ein Erdalkalimetallsalz umfassen, **dadurch gekennzeichnet, dass** die Partikel Folgendes umfassen:
a) einen alkalischen Kern, der Folgendes umfasst:
i) zumindest ein Erdalkalimetallsalz, das aus Calciumhydroxid, Magnesiumhydroxid, Magnesiumcarbonat, Calciumcarbonat, Magnesium-bis(hexamethyl-disilazid), Calcium-bis(hexamethyldisilazid), Calciumacetylacetonathydrat, Calcium-bis(2,2,6,6-tetramethyl-3,5-heptandionat) oder einem Gemisch davon ausgewählt ist, und
ii) gegebenenfalls zumindest ein hydrophiles Cellulosederivat; und
b) eine stabilisierende Außenschicht, die zumindest ein Stabilisierungsmittel umfasst, das aus silylierten hydrophoben Polysacchariden und hydrophoben Polysacchariden ausgewählt ist.

2. Stabilisierte alkalische Verbundstoff-Nanopartikel nach Anspruch 1, **dadurch gekennzeichnet, dass** der alkalische Kern zumindest ein hydrophiles Cellulosederivat umfasst, das das zumindest eine Erdalkalimetall funktionalisiert, wobei das zumindest eine hydrophile Cellulosederivat aus Hydroxyethylcellulose, Methylcellulose und Carboxymethylcellulose ausgewählt ist.

3. Stabilisierte alkalische Verbundstoff-Nanopartikel nach Anspruch 2, **dadurch gekennzeichnet, dass**
i) das zumindest eine Erdalkalimetallsalz aus Calciumhydroxid, Magnesiumhydroxid, Calciumcarbonat, Magnesiumcarbonat ausgewählt ist; und
ii) das zumindest eine hydrophile Cellulosederivat aus Hydroxyethylcellulose, Methylcellulose, Carboxymethylcellulose ausgewählt ist.

4. Stabilisierte alkalische Verbundstoff-Nanopartikel nach einem der Ansprüche 1 bis 3, **dadurch gekennzeichnet, dass**
- die silylierten hydrophoben Polysaccharide aus Trimethylsilylcellulose (TMSC), silyfierter Hydroxycellulose (SHEC), silylierter Methylcellulose (SMC), silylierter Carboxymethylcellulose (SCMC) ausgewählt sind; und/oder
- die hydrophoben Polysaccharide aus Celluloseacetat (CA), Cellulosebutyrat (CAB), Ethylcellulose (EC), fluorierter Cellulose ausgewählt sind.

5. Stabilisierte alkalische Verbundstoff-Nanopartikel nach einem der Ansprüche 1 bis 4, **dadurch gekennzeichnet, dass** die Partikelgröße der stabilisierten alkalischen Verbundstoff-Nanopartikel im Bereich von 50 nm bis 900 nm liegt.

6. Stabilisierte alkalische Verbundstoff-Nanopartikel nach Anspruch 5, **dadurch gekennzeichnet, dass** die Partikelgröße der stabilisierten alkalischen Verbundstoff-Nanopartikel im Bereich von 100 nm bis 800 nm liegt.

7. Verfahren zur Herstellung von stabilisierten alkalischen Verbundstoff-Nanopartikeln nach einem der Ansprüche 1 bis 6, **dadurch gekennzeichnet, dass**
die Nanopartikel Calcium- oder Magnesiumhydroxid oder -carbonat oder ein Gemisch davon umfassen und das Verfahren die folgenden Schritte umfasst:
a) das Zusetzen einer wässrigen Lösung von Natrium- oder Kaliumhydroxid oder -bicarbonat zu einer wässrigen Lösung von
i) Calciumchlorid, Magnesiumchlorid oder einem Gemisch davon; und
ii) gegebenenfalls einem hydrophilen Cellulosederivat,
unter Rühren des Reaktionsgemischs bei Raumtemperatur mit 200 bis 10.000 U/min oder 200 bis 1.000 U/min, um einen teilchenförmigen Niederschlag zu erhalten;
b) das Abtrennen der ausgefallenen Partikel, die Calcium- oder Magnesiumhydroxid oder -carbonat oder ein Gemisch davon umfassen, die gegebenenfalls mit dem hydrophilen Cellulosederivat funktionalisiert sind, und das Waschen der Partikel mit Wasser;
c) das Trocknen der Partikel;
d) das Dispergieren der getrockneten Partikel in einer Lösung zumindest eines Stabilisierungsmittels, das aus der aus silylierten hydrophoben Polysacchariden und hydrophoben Polysacchariden bestehenden Gruppe ausgewählt ist, in einem organischen Lösungsmittel, wodurch eine Dispersion von stabilisierten alkalischen Verbundstoff-Nanopartikeln in dem Lösungsmittel gebildet wird;
e) gegebenenfalls das Abtrennen der erhaltenen stabilisierten Nanopartikel von der Dispersion und das Trocknen der abgetrennten Partikel.

8. Verfahren nach Anspruch 7, **dadurch gekennzeichnet, dass** das Cellulosederivat gemäß a)ii) aus Methylcellulose (MC), Hydroxyethylcellulose (HEC) und Carboxymethylcellulose (CMC) ausgewählt ist.

9. Verfahren nach einem der Ansprüche 7 und 8, **dadurch gekennzeichnet, dass** das Trocknen bei einer Temperatur von etwa 40 °C bis 80 °C zumindest 3 h lang erfolgt.

10. Verfahren nach einem der Ansprüche 7 bis 9, **dadurch gekennzeichnet, dass** das Lösungsmittel ein nichtpolares Lösungsmittel, ausgewählt aus Hexamethyldisiloxan (HMDSO), fluorierten Lösungsmitteln, Tetrahydrofuran (THF) und Butanon ist oder gegebenenfalls ein Gemisch davon mit flüssigem CO₂ ist.

11. Verfahren nach einem der Ansprüche 7 bis 10, **dadurch gekennzeichnet, dass**
- die silylierten hydrophoben Polysaccharide aus Trimethylsilylcellulose (TMSC), silylierter Hydroxyethylcellulose (SHEC), silylierter Methylcellulose (SMC) und silylierter Carboxymethylcellulose (SCMC) ausgewählt sind; und/oder
- die hydrophoben Polysaccharide aus Celluloseacetat (CA), Cellulosebutyrat (CAB), Ethylcellulose (EC) und fluorierter Cellulose ausgewählt sind.

12. Verwendung von stabilisierten alkalischen Verbundstoff-Nanopartikeln nach einem der Ansprüche 1 bis 6 in einem Verfahren zum Entsäuern und Verstärken von Materialien auf Cellulosebasis, wie z.B. Papier, geleimtem Karton, Bücher, Gemälden auf Cellulosegrundierungsmaterial, Holzschnitzarbeiten und -konstruktionen oder Gegenständen auf Biopolymerbasis, insbesondere von als "kulturelles Erbe" bekannten Gegenständen.

13. Verwendung nach Anspruch 12, **dadurch gekennzeichnet, dass** die stabilisierten alkalischen Verbundstoff-Nanopartikel als Dispersion in zumindest einem nichtpolaren organischen Lösungsmittel verwendet werden, das aus Hexamethyldisiloxan (HMDSO), fluorierten Lösungsmitteln, Tetrahydrofuran (THF), Butanon und Gemischen davon ausgewählt ist.

14. Verwendung nach Anspruch 13, **dadurch gekennzeichnet, dass** die stabilisierten Verbundstoff-Nanopartikel in einem nichtwässrigen chemischen Prozess zur Wiederherstellung von Materialien auf Cellulosebasis verwendet werden, wobei die Dispersion der stabilisierten alkalischen Verbundstoff-Nanopartikel in dem zumindest einen nichtpolaren organischen Lösungsmittel, das gegebenenfalls reine Nanopartikel und/oder andere alkalische Verbindungen umfasst, entweder bei Umgebungsdruck oder unter einem Druck zwischen 1 bar und 50 bar, insbesondere von 1 bar bis 5 bar, oder unter Anwendung eines Sprühverfahrens aufgebracht wird.

## Revendications

1. Nanoparticules composites alcalines stabilisées comprenant au moins un sel de métal alcalino-terreux, **caractérisées en ce que** lesdites particules comprennent :
(a) un cœur alcalin comprenant :
(i) au moins un sel de métal alcalino-terreux choisi parmi l'hydroxyde de calcium, l'hydroxyde de magnésium, le carbonate de magnésium, le carbonate de calcium, le bis(hexaméthyldisilazide) de magnésium, le bis(hexaméthyldisilazide) de calcium, l'hydrate d'acétylacétonate de calcium, le bis(2,2,6,6-tétraméthyl-3,5-heptanedionate) de calcium, ou un mélange de ceux-ci ; et
ii) éventuellement au moins un dérivé hydrophile de cellulose ; et
b) une couche extérieure stabilisante comprenant au moins un agent stabilisant choisi parmi les polysaccharides hydrophobes silylés ou les polysaccharides hydrophobes.

2. Nanoparticules composites alcalines stabilisées selon la revendication 1, **caractérisées en ce que** ledit cœur alcalin comprend au moins un dérivé hydrophile de cellulose fonctionnalisant ledit au moins un métal alcalino-terreux, ledit au moins un dérivé hydrophile de cellulose étant choisi parmi l'hydroxyéthylcellulose, la méthylcellulose et la carboxyméthylcellulose.

3. Nanoparticules composites alcalines stabilisées selon la revendication 2, **caractérisées en ce que**
i) ledit au moins un sel de métal alcalino-terreux est choisi parmi l'hydroxyde de calcium, l'hydroxyde de magnésium, le carbonate de calcium, le carbonate de magnésium ; et
ii) ledit au moins un dérivé hydrophile de cellulose est choisi parmi l'hydroxyéthylcellulose, la méthylcellulose, la carboxyméthylcellulose.

4. Nanoparticules composites alcalines stabilisées selon l'une des revendications 1 à 3, **caractérisées en ce que**
- les polysaccharides hydrophobes silylés sont choisis parmi la triméthytsilylcellulose (TMSC), l'hydroxycellulose silylée (SHEC), la méthylcellulose silylée (SMC), la carboxyméthylcellulose silylée (SCMC) ; et/ou
- les polysaccharides hydrophobes sont choisis parmi l'acétate de cellulose (CA), le butyrate de cellulose (CAB), l'éthylcellulose (EC), la cellulose fluorée.

5. Nanoparticules composites alcalines stabilisées selon l'une des revendications 1 à 5, **caractérisées en ce que** la taille des nanoparticules composites alcalines stabilisées varie entre 50 nm et 900 nm.

6. Nanoparticules composites alcalines stabilisées selon la revendication 5, **caractérisées en ce que** la taille des nanoparticules composites alcalines stabilisées varie entre 100 nm et 800 nm.

7. Procédé de préparation de nanoparticules composites alcalines stabilisées selon l'une des revendications 1 à 6, **caractérisé en ce que**
lesdites nanoparticules comprennent de l'hydroxyde ou du carbonate de calcium ou de magnésium ou un mélange de ceux-ci et le procédé comprend les étapes suivantes :
(a) ajouter une solution aqueuse d'hydroxyde ou de bicarbonate de sodium ou de potassium à une solution aqueuse
i) du chlorure de calcium, du chlorure de magnésium ou d'un mélange de ceux-ci ; et
ii) éventuellement d'un dérivé hydrophile de cellulose,
tout en agitant le mélange réactionnel à température ambiante à 200 à 10000 tours/min ou 200 à 1000 tours/min pour obtenir un précipité particulaire ;
b) séparer les particules précipitées comprenant de l'hydroxyde ou du carbonate de calcium ou de magnésium ou un mélange de ceux-ci, éventuellement fonctionnalisées avec ledit dérivé hydrophile de cellulose, et laver les particules avec de l'eau ;
c) sécher les particules ;
d) disperser les particules séchées dans une solution d'au moins un agent stabilisant choisi dans le groupe constitué par les polysaccharides hydrophobes silylés ou les polysaccharides hydrophobes dans un solvant organique, formant ainsi une dispersion de nanoparticules composites alcalines stabilisées dans le solvant ;
e) éventuellement séparer les nanoparticules stabilisées résultantes de la dispersion et sécher les particules séparées.

8. Procédé selon la revendication 7, **caractérisé en ce que** le dérivé de cellulose selon a)ii) est choisi parmi la méthylcellulose (MC), l'hydroxyéthylcellulose (HEC) et la carboxyméthylcellulose (CMC).

9. Procédé selon l'une des revendications 7 et 8, **caractérisé en ce que** le séchage est réalisé à une température d'environ 40 °C à 80 °C pendant au moins 3 h.

10. Procédé selon l'une des revendications 7 à 9, **caractérisé en ce que** le solvant est un solvant non-polaire choisi parmi l'hexaméthyldisiloxane (HMDSO), les solvants fluorés, le tétrahydrofurane (THF) et la butanone, ou est éventuellement un mélange de ceux-ci avec du CO₂ liquide.

11. Procédé selon l'une des revendications 7 à 10, **caractérisé en ce que**
- les polysaccharides hydrophobes silylés sont choisis parmi la triméthylsilylcellulose (TMSC), l'hydroxyéthylcellulose silylée (SHEC), la méthylcellulose silylée (SMC) et la carboxyméthylcellulose silylée (SCMC) ; et/ou
- les polysaccharides hydrophobes sont choisis parmi l'acétate de cellulose (CA), le butyrate de cellulose (CAB), l'éthylcellulose (EC) et la cellulose fluorée.

12. Utilisation de nanoparticules composites alcalines stabilisées selon l'une des revendications 1 à 6 dans un procédé de désacidification et de consolidation de matériaux à base de cellulose, tels que le papier, le carton encollé, les livres, les peintures sur un matériau de fond de cellulose, les sculptures et constructions en bois ou les objets à base de biopolymères, en particulier les objets dits "patrimoine culturel".

13. Utilisation selon la revendication 12, **caractérisée en ce que** les nanoparticules composites alcalines stabilisées sont utilisées sous forme de dispersion dans au moins un solvant organique non-polaire choisi parmi l'hexaméthyldisiloxane (HMDSO), les solvants fluorés, le tétrahydrofurane (THF), la butanone et les mélanges de ceux-ci.

14. Utilisation selon la revendication 13, **caractérisée en ce que** les nanoparticules composites stabilisées sont utilisées dans un procédé chimique non-aqueux pour la restauration de matériaux à base de cellulose, dans lequel la dispersion des nanoparticules composites alcalines stabilisées dans ledit au moins un solvant organique non-polaire, comprenant éventuellement des nanoparticules pures et/ou d'autres composés alcalins, est appliquée soit à pression ambiante, soit sous une pression comprise entre 1 bar et 50 bar, en particulier entre 1 bar et 5 bar, soit en utilisant un procédé de pulvérisation.
